# EUROPEAN PATENT APPLICATION

(11) **EP 4 794 384 A1**
(43) Date of publication of application: **19.08.2026**
(21) Application number: 23955054.4
(22) Date of filing: 09.10.2023
(51) Int. Cl.: H04W 28/10

(54) **LOW LATENCY SERVICE DATA TRANSMISSION METHOD AND DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/123624
(87) International publication number: WO 2025/076665

(57) **Abstract**

Embodiments of the present disclosure relate to the technical field of communications, and provide a low latency service data transmission method and device, and a storage medium. The method comprises: an AP sending a first physical layer protocol data unit (PPDU) within a transmission opportunity (TXOP), the first PPDU carrying non-low latency service data, the first PPDU comprising first identification information, and the first identification information being used for instructing to transmit the low latency service data after sending the first PPDU within the TXOP; if a low latency service instruction frame sent by at least one STA is received, the AP receiving a second PPDU sent by at least one STA in the TXOP, the second PPDU carrying the low latency service data, and the low latency service instruction frame being used for instructing to transmit the low latency service data. Embodiments of the present disclosure provide a low latency service data transmission mode.

## Description

### TECHNICAL FIELD

The present disclosure relates to the field of communication technologies, and in particular to a method for low-latency service data transmission, a device and a storage medium.

### BACKGROUND

To achieve higher throughput, lower network latency, and higher reliability, Ultra High Reliability (UHR) technologies have been proposed to improve the reliability of Wireless Local Area Network (WLAN) connectivity, reduce latencies, increase manageability, increase throughput and reduce device level power consumption at different Signal-to-Noise Ratio (SNR) levels.

In UHR, the related mechanisms for transmitting low-latency service data during the transmission of non-low-latency service data within a Transmission Opportunity (TXP) will be further studied.

### SUMMARY

Embodiments of the present disclosure provide a method for low-latency service data transmission, a device, and a storage medium, which can provide a transmission mode for low-latency service data.

In a first aspect, embodiments of the present disclosure provide a method for low-latency service data transmission, and the method includes:
sending, by an AP, a first physical protocol data unit (PPDU) within a transmission opportunity (TXOP), wherein the first PPDU carries non-low-latency service data and includes first indication information, and the first indication information is configured to indicate that low-latency service data is transmitted after the first PPDU is sent within the TXOP; and
if a low-latency service indication frame sent by at least one STA is received, receiving, by the AP, within the TXOP, a second PPDU sent by the at least one STA, wherein the second PPDU carries the low-latency service data, and the low-latency service indication frame is configured to indicate transmission of the low-latency service data.

In a second aspect, embodiments of the present disclosure provide a method for low-latency service data transmission, and the method includes:
if a first PPDU is received within a transmission opportunity (TXOP), sending, by a STA, a low-latency service indication frame, wherein the first PPDU carries non-low-latency service data and includes first indication information, the first indication information is configured to indicate that low-latency service data is transmitted after the first PPDU is sent within the TXOP, and the low-latency service indication frame is configured to indicate transmission of the low-latency service data; and
sending, by the STA, a second PPDU within the TXOP, wherein the second PPDU carries the low-latency service data.

In a third aspect, embodiments of the present disclosure provide an AP, including:
a transceiving module, configured to send a first physical protocol data unit (PPDU) within a transmission opportunity (TXOP), wherein the first PPDU carries non-low-latency service data and includes first indication information, and the first indication information is configured to indicate that low-latency service data is transmitted after the first PPDU is sent within the TXOP; and
the transceiving module, configured to, if a low-latency service indication frame sent by at least one STA is received, receive, within the TXOP, a second PPDU sent by the at least one STA, wherein the second PPDU carries the low-latency service data, and the low-latency service indication frame is configured to indicate transmission of the low-latency service data.

In a fourth aspect, embodiments of the present disclosure provide a STA, including:
a transceiving module, configured to, if a first PPDU is received within a transmission opportunity (TXOP), send a low-latency service indication frame, wherein the first PPDU carries non-low-latency service data and includes first indication information, the first indication information is configured to indicate that low-latency service data is transmitted after the first PPDU is sent within the TXOP, and the low-latency service indication frame is configured to indicate transmission of the low-latency service data; and
the transceiving module, configured to send a second PPDU within the TXOP, wherein the second PPDU carries the low-latency service data.

In a fifth aspect, embodiments of the present disclosure provide an AP, including one or more processors;
wherein the AP is configured to perform the method for low-latency service data transmission provided in the first aspect of the embodiments of the present disclosure.

In a sixth aspect, embodiments of the present disclosure provide a STA, including one or more processors;
wherein the STA is configured to perform the method for low-latency service data transmission provided in the second aspect of the embodiments of the present disclosure.

In a seventh aspect, embodiments of the present disclosure provide a storage medium having instructions stored thereon, wherein the instructions, when running on a communication device, cause the communication device to perform the method for low-latency service data transmission provided in the first aspect of the embodiments of the present disclosure.

In an eighth aspect, embodiments of the present disclosure provide a communication system, including an AP and at least one STA, wherein the AP is configured to perform the method described in the first aspect, and each STA is configured to perform the method described in the second aspect.

Based on the method for low-latency service data transmission, the device, and the storage medium provided in the embodiments of the present disclosure, a mode for transmitting the low-latency service data during the transmission of the non-low-latency service data within the TXOP can be provided.

Additional aspects and advantages of the embodiments of the present disclosure will be set forth in part in the following description, and will become apparent from the following description or may be learned by practice of the present disclosure.

### BRIEF DESCRIPTION OF THE DRAWINGS

To more clearly illustrate the technical solutions of embodiments of the present disclosure, the accompanying drawings used in the description of the embodiments of the present disclosure will be briefly introduced below. Obviously, the accompanying drawings in the following description are only some embodiments of the present disclosure. For those ordinary skilled in the art, other drawings can be obtained based on these drawings without paying creative effort.
FIG. 1 shows a schematic diagram of an architecture of a communication system according to an embodiment of the present disclosure;
FIG. 2 shows a first schematic interactive diagram of a method for low-latency service data transmission according to an embodiment of the present disclosure;
FIG. 3 shows a second schematic interactive diagram of a method for low-latency service data transmission according to an embodiment of the present disclosure;
FIG. 4 shows a first schematic flowchart of a method for low-latency service data transmission according to an embodiment of the present disclosure;
FIG. 5 shows a second schematic flowchart of a method for low-latency service data transmission according to an embodiment of the present disclosure;
FIG. 6 is a schematic structural diagram of an AP provided in an embodiment of the present disclosure;
FIG. 7 is a schematic structural diagram of a STA provided in an embodiment of the present disclosure;
FIG. 8 is a schematic structural diagram of a communication device provided according to an embodiment of the present disclosure; and
FIG. 9 is a schematic structural diagram of a chip provided according to an embodiment of the present disclosure.

### DETAILED DESCRIPTION

Embodiments of the present disclosure provide a method for low-latency service data transmission, a device, and a storage medium.

In a first aspect, embodiments of the present disclosure provide a method for low-latency service data transmission, and the method includes:
sending, by an AP, a first physical protocol data unit (PPDU) within a transmission opportunity (TXOP), wherein the first PPDU carries non-low-latency service data and includes first indication information, and the first indication information is configured to indicate that low-latency service data is transmitted after the first PPDU is sent within the TXOP; and
if a low-latency service indication frame sent by at least one STA is received, receiving, by the AP, within the TXOP, a second PPDU sent by the at least one STA, wherein the second PPDU carries the low-latency service data, and the low-latency service indication frame is configured to indicate transmission of the low-latency service data.

In the above embodiments, during the transmission of the non-low-latency service data within the TXOP, the AP can carry the first indication information in the first PPDU carrying the non-low-latency service data to indicate to the STA that the low-latency service data is transmitted after the first PPDU carrying the non-low-latency service data is sent. In this case, the at least one STA that has received the first PPDU and has low-latency service data to be transmitted can send the low-latency service indication frame to indicate to the AP that there is the low-latency service data to be transmitted within the TXOP. Thus, the AP can continue to receive, within the TXOP, the second PPDU carrying the low-latency service data sent by at least one STA, enabling the transmission of the low-latency service data after the transmission of the non-low-latency service data within the TXOP.

In combination with some embodiments of the first aspect, in some embodiments, the method further includes:
sending, by the AP, a first trigger frame, after sending the first PPDU, wherein the first trigger frame includes a plurality of random access radio units (RA-RUs), and each RA-RU is configured to send the low-latency service indication frame.

In the above embodiments, the AP carries information of the plurality of random access radio units (RA-RUs) through the first trigger frame, which can enable individual STAs to select different RA-RUs to send the low-latency service indication frames, avoiding communication conflicts between the individual STAs in the process of accessing the channel via contention to send the low-latency service indication frames. In addition, the AP can also receive the low-latency service indication frames sent by a plurality of STAs, which is beneficial to improving the low-latency service data transmission efficiency.

In combination with some embodiments of the first aspect, in some embodiments, the method further includes:
sending, by the AP, a third PPDU within the TXOP, after receiving the second PPDU sent by the at least one STA, wherein the third PPDU carries the non-low-latency service data and includes second indication information, and the second indication information is configured to indicate that the low-latency service data is transmitted after the third PPDU is sent within the TXOP.

In the above embodiments, after receiving the second PPDU carrying the low-latency service data sent by the STA, the AP can continue to transmit the third PPDU carrying the non-low-latency service data within the remaining time of the TXOP. The third PPDU can carry the second indication information to indicate that the low-latency service data can still be transmitted after the third PPDU is sent, thereby realizing the effective utilization of the TXOP and improving the transmission efficiency of the low-latency service data.

In combination with some embodiments of the first aspect, in some embodiments, each low-latency service indication frame includes first indication information, and the first indication information is configured to indicate a data size of low-latency service data to be transmitted by a corresponding first STA.

In the above embodiments, each low-latency service indication frame can indicate the data size of the low-latency service data to be transmitted by the corresponding STA, thereby facilitating the AP to determine the size of the low-latency service data to be transmitted by the STA and whether to allow the corresponding STA to send the low-latency service data, which is beneficial to improve the stability and effectiveness of the low-latency service data transmission.

In combination with some embodiments of the first aspect, in some embodiments, receiving, by the AP, within the TXOP, the second PPDU sent by the at least one first STA includes:
sending, by the AP, a buffer status report poll frame, wherein the buffer status report poll frame includes a device identity of the at least one STA;
receiving, by the AP, a buffer status report frame sent by the at least one STA; and
allocating, by the AP, a resource unit (RU) for transmitting the low-latency service data to the at least one STA and receiving the second PPDU sent, according to an obtained RU, by the at least one STA.

In the above embodiments, the AP can request the STA to report the buffer status through the buffer status report poll frame, and then allocate the RU to the STA according to the buffer status of the STA, which helps to ensure the effective transmission of the low-latency service data.

In combination with some embodiments of the first aspect, in some embodiments, each buffer status report frame includes at least one of:
second indication information, configured to indicate a data size of low-latency service data to be transmitted by a corresponding STA; or
latency information of the low-latency service data to be transmitted by the corresponding STA.

In the above embodiments, each buffer status report frame can indicate the data size or the latency information of the low-latency service data to be transmitted by the corresponding STA, which helps the AP determine the size of the low-latency service data to be transmitted by the STA, and determine whether the low-latency service data sent by the corresponding STA can be received within the TXOP, which helps to improve the stability and effectiveness of the low-latency service data transmission.

In combination with some embodiments of the first aspect, in some embodiments, the first indication information and the second indication information are pre-emption identities.

In a second aspect, embodiments of the present disclosure provide a method for low-latency service data transmission, and the method includes:
if a first PPDU is received within a transmission opportunity (TXOP), sending, by a STA, a low-latency service indication frame, wherein the first PPDU carries non-low-latency service data and includes first indication information, the first indication information is configured to indicate that low-latency service data is transmitted after the first PPDU is sent within the TXOP, and the low-latency service indication frame is configured to indicate transmission of the low-latency service data; and
sending, by the STA, a second PPDU within the TXOP, wherein the second PPDU carries the low-latency service data.

In the above embodiments, during the transmission of the non-low-latency service data within the TXOP, the AP can carry the first indication information in the first PPDU carrying the non-low-latency service data to indicate to the STA that the low-latency service data is transmitted after the first PPDU carrying the non-low-latency service data is sent. In this case, when the STA receives the first PPDU and has the low-latency service data to be transmitted, it can send the low-latency service indication frame to the AP to indicate to the AP that there is the low-latency service data to be transmitted within the TXOP. Thus, the AP can continue to receive, within the TXOP, the second PPDU carrying the low-latency service data sent by at least one STA, enabling the transmission of the low-latency service data after the transmission of the non-low-latency service data within the TXOP.

In combination with some embodiments of the second aspect, in some embodiments, the method further includes:
receiving, by the STA, a first trigger frame after receiving the first PPDU, wherein the first trigger frame includes at least one RA-RU, and each RA-RU is configured to send the low-latency service indication frame.

In the above embodiments, the AP carries information of the plurality of RA-RUs through the first trigger frame, which can enable individual STAs to select different RA-RUs to send the low-latency service indication frames, avoiding communication conflicts between the individual STAs in the process of accessing the channel via contention to send the low-latency service indication frames. In addition, the AP can also receive the low-latency service indication frames sent by a plurality of STAs, which is beneficial to improving the low-latency service data transmission efficiency.

In combination with some embodiments of the second aspect, in some embodiments, the low-latency service indication frame includes first indication information, and the first indication information is configured to indicate a data size of low-latency service data to be transmitted.

In the above embodiments, the STA can indicate the data size of the low-latency service data to be transmitted through the low-latency service indication frame, which helps the AP determine the size of the low-latency service data to be transmitted by the STA and determine whether to allow the STA to send the low-latency service data, which helps to improve the stability and effectiveness of the low-latency service data transmission.

In combination with some embodiments of the second aspect, in some embodiments, sending, by the STA, the low-latency service indication frame includes:
sending, by the STA, the low-latency service indication frame according to any one of the RA-RUs.

In the above embodiments, the STA can select any RA-RU to send the low-latency service indication frame, avoiding communication conflicts with other STAs in the process of accessing the channel via contention to send the low-latency service indication frame.

In combination with some embodiments of the second aspect, in some embodiments, sending, by the STA, the second PPDU within the TXOP includes:
receiving, by the STA, a buffer status report poll frame, wherein the buffer status report poll frame includes a device identity of the at least one STA;
sending, by the STA, a buffer status report frame; and
obtaining, by the STA, a RU for transmitting the low-latency service data and sending the second PPDU according to the RU.

In the above embodiments, after the STA receives the buffer status report poll frame, it can report the buffer status to the AP so that the AP can allocate the RU to the STA according to the buffer status of the STA, thereby helping to ensure the effective transmission of the low-latency service data.

In combination with some embodiments of the second aspect, in some embodiments, the buffer status report frame includes at least one of:
second indication information, configured to indicate a data size of low-latency service data to be transmitted; or
latency information of the low-latency service data to be transmitted.

In the above embodiments, the STA can indicate the data size or the latency information of the low-latency service data to be transmitted, which helps the AP determine the size of the low-latency service data to be transmitted by the STA, and determine whether the low-latency service data sent by the STA can be received within the TXOP, which helps to improve the stability and effectiveness of the low-latency service data transmission.

In combination with some embodiments of the second aspect, in some embodiments, the first indication information is a pre-emption identity.

In a third aspect, embodiments of the present disclosure provide an AP, including:
a transceiving module, configured to send a first physical protocol data unit (PPDU) within a transmission opportunity (TXOP), wherein the first PPDU carries non-low-latency service data and includes first indication information, and the first indication information is configured to indicate that low-latency service data is transmitted after the first PPDU is sent within the TXOP; and
the transceiving module, configured to, if a low-latency service indication frame sent by at least one STA is received, receive, within the TXOP, a second PPDU sent by the at least one STA, wherein the second PPDU carries the low-latency service data, and the low-latency service indication frame is configured to indicate transmission of the low-latency service data.

In a fourth aspect, embodiments of the present disclosure provide a STA, including:
a transceiving module, configured to, if a first PPDU is received within a transmission opportunity (TXOP), send a low-latency service indication frame, wherein the first PPDU carries non-low-latency service data and includes first indication information, the first indication information is configured to indicate that low-latency service data is transmitted after the first PPDU is sent within the TXOP, and the low-latency service indication frame is configured to indicate transmission of the low-latency service data; and
the transceiving module, configured to send a second PPDU within the TXOP, wherein the second PPDU carries the low-latency service data.

In a fifth aspect, embodiments of the present disclosure provide an AP, including one or more processors;
wherein the AP is configured to perform the method for low-latency service data transmission provided in the first aspect and implementations thereof.

In a sixth aspect, embodiments of the present disclosure provide a STA, including one or more processors;
wherein the STA is configured to perform the method for low-latency service data transmission provided in the second aspect and implementations thereof.

In a seventh aspect, embodiments of the present disclosure provide a communication device, including one or more processors;
the communication device can be used as an AP to execute the method for low-latency service data transmission provided in the first aspect and implementations thereof, and the communication device can be used as an STA to execute the method for low-latency service data transmission provided in the second aspect and implementations thereof.

In an eighth aspect, embodiments of the present disclosure provide a storage medium having instructions stored thereon, wherein the instructions, when running on a communication device, cause the communication device to perform the method described in the first and second aspects, and implementations of the first and second aspects.

In a ninth aspect, embodiments of the present disclosure provide a program product that, when performed by a communication device, causes the communication device to perform the method as described in the first and second aspects, and implementations of the first and second aspects.

In a tenth aspect, embodiments of the present disclosure provide a computer program that, when running on a computer, causes the computer to perform the method described in the first and second aspects, and implementations of the first and second aspects.

In an eleventh aspect, embodiments of the present disclosure provide a chip or chip system. The chip or chip system includes a processing circuit configured to perform the method as described in the first and second aspects, and implementations of the first and second aspects.

In a twelfth aspect, embodiments of the present disclosure provide a communication system, including an AP and at least one STA, wherein the AP is configured to perform the method described in the first aspect and implementations thereof, and each STA is configured to perform the method described in the second aspect and implementations thereof.

It is understood that the APs, STAs, communication systems, communication devices, storage media, program products, computer programs, chips, or chip systems are all used to execute the methods proposed in the embodiments of the present disclosure. Therefore, the beneficial effects they may achieve may be referred to in the corresponding methods, and will not be elaborated upon here.

Embodiments of the present disclosure provide a method for low-latency service data transmission, a device, and a storage medium. In some embodiments, terms such as method for low-latency service data transmission and information processing method and low-latency service data transmission method may be used interchangeably, terms such as communication device and information processing device may be used interchangeably, and terms like information processing system and communication system may be used interchangeably.

The embodiments of the present disclosure are not exhaustive, but merely illustrate a part of the embodiments and do not constitute specific limitations on the scope of protection of the present disclosure. In the absence of contradiction, each step in a certain embodiment can be implemented as an independent embodiment, and the steps may be arbitrarily combined. For example, a solution with a part of steps removed from a certain embodiment may also be implemented as an independent embodiment, and the order of the steps in a certain embodiment may be arbitrarily exchanged. In addition, the optional implementations in a certain embodiment may be arbitrarily combined. Additionally, the various embodiments may be arbitrarily combined. For example, a part of or all of the steps of different embodiments may be arbitrarily combined, and a certain embodiment may be arbitrarily combined with the optional implementations of other embodiments.

In various embodiments of the present disclosure, unless otherwise specified or logically conflicting, the terms and/or descriptions among the embodiments are consistent and may be mutually referenced. Technical features in different embodiments may be combined based on their inherent logical relationships to form new embodiments.

The terms used in the embodiments of the present disclosure are for the purpose of describing specific embodiments only, and are not intended to limit the present disclosure.

In the embodiments of the present disclosure, unless otherwise specified, elements expressed in singular forms, such as "a", "an", "the", "above", "said", "aforementioned", "this", etc. may refer to "one and only one", or may refer to "one or more" or "at least one" and the like. For example, when articles such as "a", "an", "the" in English are used in translation, the nouns following these articles may be understood as singular expression forms or plural expression forms.

In the embodiments of the present disclosure, "a plurality of" refers to two or more.

In some embodiments, terms such as "at least one of", "one or more", "a plurality of", and "multiple" may be interchangeable.

In some embodiments, the reciting manners such as "at least one of A and B", "A and/or B", "in one situation A, in another situation B", "in response to one situation A, in response to another situation B" can include the following technical solutions depending on the situation: in some embodiments, A (executing A independently of B); in some embodiments, B (executing B independently of A); in some embodiments, selectively executing A or B (executing A and B selectively); and in some embodiments, A and B (executing both A and B). When there are more branches such as A, B, C, etc., the solution is similar to the above.

In some embodiments, the reciting manners such as "A or B" can include the following technical solutions depending on the situation: in some embodiments, A (executing A independently of B); in some embodiments, B (executing B independently of A); in some embodiments, selectively executing A or B (executing A and B are selectively). When there are more branches such as A, B, C, etc., the solution is similar to the above.

The prefix words such as "first" and "second" in the embodiments of the present disclosure are only used to distinguish different described objects, and do not limit the position, order, priority, number, or content, etc. of the described objects. The description of the described objects may refer to the description in the claims or the context of the embodiments, and should not constitute unnecessary limitations due to the use of the prefix words. For example, if the described object is a "field", then the ordinal number before the "field" in the "first field" and the "second field" does not limit the position or order between the "fields", and "first" and "second" do not limit whether the "fields" they modify are in the same message, nor do they limit the sequential order of the "first field" and the "second field". For another example, if the described object is a "level", then the ordinal number before the "level" in the "first level" and the "second level" does not limit the priority between the "levels". For another example, the number of the described objects is not limited by the ordinal number, and may be one or more. Taking the "first device" as an example, the number of "devices" may be one or more. Furthermore, the objects modified by different prefix words may be the same or different. For example, if the described object is a "device", then the "first device" and the "second device" may be the same device or different devices, and may be of the same type or different types. For another example, if the described object is "information", then the "first information" and the "second information" may be the same information or different information, and may be information of the same content or information of different contents.

In some embodiments, "comprising A", "including A", "used for indicating A", and "carrying A" may be interpreted as directly carrying A, or may be interpreted as indirectly indicating A.

In some embodiments, terms such as "in response to...", "in response to determining...", "in the case of...", "when...", "at the time of...", "if...", "assuming...", etc. may be interchangeable.

In some embodiments, terms such as "greater than", "greater than or equal to", "not less than", "more than", "more than or equal to", "not smaller than", "higher than", "higher than or equal to", "not lower than", "above", etc. may be interchangeable. Terms such as "less than", "less than or equal to", "not greater than", "smaller than" "smaller than or equal to", "not more than", "lower than", "lower than or equal to", "not higher than", "below", etc. may be interchangeable.

In some embodiments, obtaining data, information, etc. may comply with the laws and regulations of the country where it is located.

In some embodiments, data, information, etc. may be obtained after the user consent is obtained.

In addition, each element, each row, or each column in the table of the embodiments of the present disclosure can be implemented as an independent embodiment, and the combination of any element, any row, or any column may also be implemented as an independent embodiment.

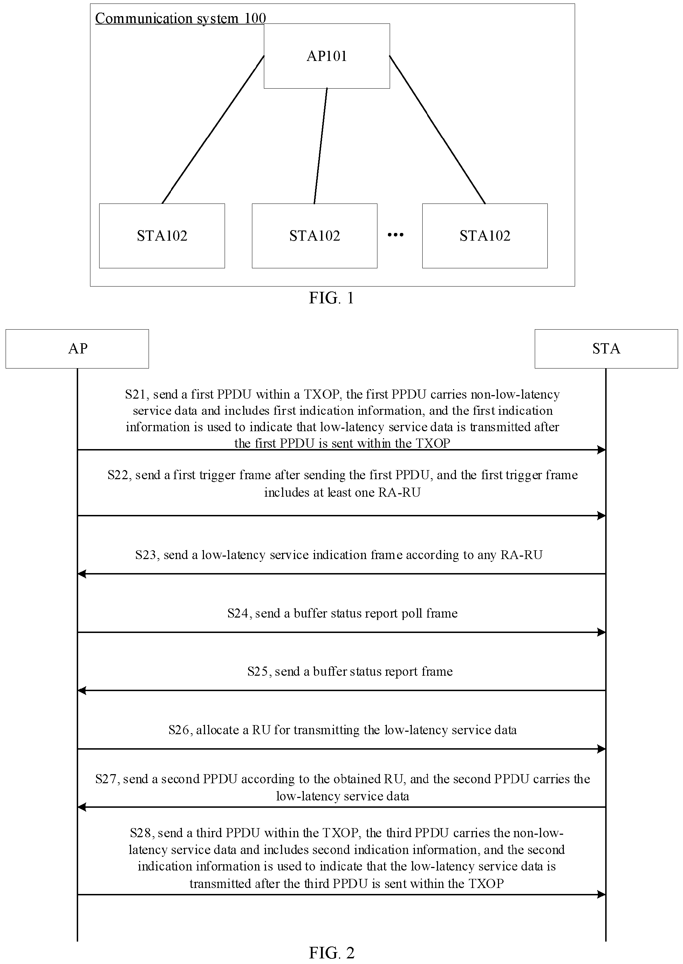

FIG. 1 shows a schematic diagram of an architecture of a communication system according to an embodiment of the present disclosure.

As shown in FIG. 1, the communication system 100 includes an AP 101 and at least one STA 102.

The AP 101 and the STA 102 can be standalone devices or devices that support Multi-Link Operation (MLO) technologies, such as AP MLD or Non-AP MLD, are used. To achieve higher throughput, lower network latency, and higher reliability, using the MLO technologies, the AP 101 and the AP 102 negotiate to establish multiple communication links across frequency bands via Multi-Link Setup frames, and then enable the established multilinks through the Traffic-to-link Mapping mechanism.

In some embodiments, the AP 101 may be a terminal device or a network device with a wireless fidelity chip.

In some embodiments, the STA 102 may be a device including a wireless communication chip supporting the WiFi communication function, a wireless sensor, or a wireless communication terminal. In some embodiments, the wireless communication terminal may be at least one of, but not limited to, a mobile phone, a wearable device, an IoT device supporting the WiFi communication function, a car with the WiFi communication function, a smart car, a pad, a computer with the wireless transceiving function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, or a wireless terminal device in a smart home.

It should be understood that the communication system described in the embodiments of the present disclosure is for a clearer explanation of the technical solution of the embodiments of the present disclosure, but does not constitute a limitation on the technical solution proposed in the embodiments of the present disclosure. Those ordinary skilled in the art know that with the evolution of the system architecture and the emergence of new service scenarios, the technical solution proposed in the embodiments of the present disclosure is also applicable to similar technical problems.

The embodiments of the present disclosure described below may be applied to the communication system 100 shown in FIG. 1, or a part of the subjects in the communication system 100, but are not limited thereto. The subjects shown in FIG. 1 are illustrative only. The communication system can include all of or a part of the subjects shown in FIG. 1, or can include subjects other than those shown in FIG. 1. The number and form of each subject are arbitrary, and each subject may be physical or virtual. The link relationships between the subjects are illustrative. The subjects may not be linked to each other or may be linked to each other. The link may be in any way, either direct or indirect, wired or wireless.

The embodiments of the present disclosure can be applied to Wireless Local Area Networks (WLANs), such as to IEEE 802.11 system standards, e.g., 802.11a/b/g standards, 802.11n standards, 802.11ac standards, 802.11ax standards, or their next generations, e.g., 802.11bn, 802.11bf, 802.11be standards (also known as Wi-Fi 7, Extremely High-Throughput (ETH) standards, or even next generation standards). Alternatively, the embodiments of the present disclosure can also be applied to WLAN systems such as Internet of Things (IoT) networks or Vehicle-to-X (V2X) networks. Alternatively, the embodiments of the present disclosure can also be applied to other possible communication systems, such as long term evolution (LTE) systems, LTE frequency division duplex (FDD) systems, LTE time division duplex (TDD) systems, universal mobile telecommunication system (UMTS), worldwide interoperability for microwave access (WiMAX) communication systems, and future 5th generation (5G) communication systems, etc.

The technical solutions in embodiments of the present disclosure will be further described clearly and completely below with reference to the accompanying drawings. Obviously, the described embodiments are only a part of the embodiments of the present disclosure, and not all of the embodiments. Based on the embodiments in the present disclosure, all other embodiments obtained by those skilled in the art without inventive effort are within the protection scope of the present disclosure.

FIG. 2 shows a first schematic interactive diagram of a method for low-latency service data transmission according to an embodiment of the present disclosure. The method for low-latency service data transmission shown in FIG. 2 includes steps S21 to S28.

In the step S21, an AP sends a first PPDU within a TXOP, the first PPDU carries non-low-latency service data and includes first indication information, and the first indication information is used to indicate that low-latency service data is transmitted after the first PPDU is sent within the TXOP.

In some embodiments, the AP can continuously send, within the TXOP, at least one Physical Protocol Data Unit (PPDU) carrying the non-low-latency service data. The first PPDU is the last PPDU carrying the non-low-latency service data sent by the AP within the TXOP.

In some embodiments, when the AP sends the first PPDU (i.e., the last PPDU) carrying the non-low-latency service data within the TXOP for transmission of the non-low-latency service data, it can carry the first indication information within the first PPDU to indicate, through the first indication information, that the transmission of the low-latency service data is about to be performed after the first PPDU is sent within the current TXOP.

In some embodiments, the first indication information can be a pre-emption identity, or other indication information that is pre-defined or pre-negotiated with the STA to indicate that the low-latency service data is about to be transmitted, which is not limited here.

In the step S22, the AP sends a first trigger frame after sending the first PPDU, and the first trigger frame includes at least one RA-RU.

In some embodiments, after sending the first PPDU within the current TXOP, the AP can continue to send the first Trigger Frame (TF) within the current TXOP.

The first trigger frame includes at least one random access radio unit, each RA-RU being used to send a Low Latency Indication (LLI) frame.

The low-latency service indication frame is used to indicate the transmission of the low-latency service data.

The individual RA-RUs do not overlap with each other.

In some embodiments, by sending the first trigger frame, the AP can enable a STA that has monitored the first indication information and has the low-latency service data to be transmitted to select any RA-RU to send the low-latency service indication frame to indicate to the AP that the corresponding STA needs to transmit the low-latency service data.

In some embodiments, the AP can send the first PPDU and the first trigger frame in the form of an Aggregated MAC Protocol Data Unit (A-MPDU), that is, send both the first PPDU and the first trigger frame through the A-MPDU.

In the step S23, the STA sends the low-latency service indication frame according to any RA-RU.

In some embodiments, after each STA monitors the first indication information in the first PPDU, if it has the low-latency service data to be transmitted, it can send the low-latency service indication frame in the current TXOP according to any one of the RA-RUs in the first trigger frame to indicate to the AP that the low-latency service data needs to be transmitted.

In some embodiments, the low-latency service indication frame sent by each STA can include first indication information, which is used to indicate a data size of the low-latency service data to be transmitted by the corresponding STA.

In the step S24, the AP sends a buffer status report poll frame.

In some embodiments, since the first trigger frame includes the at least one RA-RU, the AP can receive, within the current TXOP, the low-latency service indication frame sent by at least one STA after sending the first trigger frame. In this case, the AP can send the Buffer Status Report Poll (BSRP) frame within the current TXOP.

The buffer status report poll frame includes a device identity of at least one STA that replies with the low-latency service indication frame and the AP allows to transmit the low-latency service data, so that the corresponding STA reports the buffer status after receiving the buffer status report poll, that is, reports the data size of the low-latency service data to be transmitted.

The device identity can be any information that uniquely identifies the STA, such as a MAC address of the STA, etc., which is not limited here.

In the step S25, the STA sends a buffer status report frame.

In some embodiments, after the STA receives the buffer status report poll frame that includes the device identity of the STA, it can send the Buffer Status Report (BSR) frame to the AP within the current TXOP.

The buffer status report frame sent by the STA is used to report the buffer status of the STA to the AP, that is, to report the data size of the low-latency service data to be transmitted.

In some embodiments, the buffer status report frame sent by the STA can include at least one of:
second indication information, used to indicate a data size of the low-latency service data to be transmitted by the STA; or
latency information of the low-latency service data to be transmitted by the STA, such as 5ms or 10ms, which is not limited here.

In the step S26, the AP allocates the RU for transmitting the low-latency service data.

In some embodiments, after receiving the buffer status report frame sent by the at least one STA, the AP can respectively allocate, within the current TXOP, RUs for transmitting the low-latency service data to at least one STA that is allowed to transmit the low-latency service data.

The AP can determine, according to the second indication information and/or the latency information in each buffer status report frame, whether to allow the corresponding STA to transmit the low-latency service data and allocate the uplink RU for transmitting the low-latency service data to the STA that is allowed to transmit the low-latency service data.

The AP can allocate the uplink RU resource to the STA through a Multi-User Request To Send (MU-RTS) frame, and trigger the STA to perform uplink transmission of the low-latency service data through a second trigger frame (such as a Basic-Trigger frame).

In the step S27, the STA sends a second PPDU according to the obtained RU, and the second PPDU carries the low-latency service data.

In some embodiments, after the STA obtains the uplink RU resource allocated by the AP for transmitting the low-latency service data, the STA can send, within the current TXOP, the second PPDU carrying the low-latency service data according to the obtained RU resource.

In the step S28, the AP sends a third PPDU within the TXOP, the third PPDU carries the non-low-latency service data and includes second indication information, and the second indication information is used to indicate that the low-latency service data is transmitted after the third PPDU is sent within the TXOP.

In some embodiments, after the AP completes the low-latency service data transmission with individual STAs within the current TXOP, if there is still time remaining in the current TXOP, it can continue to send a PPDU carrying the non-low-latency service data within the current TXOP to continue the transmission of the non-low-latency service data.

Furthermore, the AP can carry the second indication information in the last PPDU (the third PPDU) carrying the non-low-latency service data to indicate, through the second indication information, that the low-latency service data is about to be transmitted after the third PPDU is sent within the current TXOP.

Based on this, the AP can transmit the low-latency service data with the at least one STA after receiving the low-latency service indication frame sent, within the current TXOP, by the at least one STA.

In some embodiments, the second indication information can be a pre-emption identity, or other indication information that is pre-defined or pre-negotiated with the STA to indicate that the low-latency service data is about to be transmitted, which is not limited here.

In some embodiments, if the AP does not receive the low-latency service indication frame sent by any STA after sending the first PPDU within the current TXOP, the AP does not receive the PPDU carrying the low-latency service data sent by any STA. Furthermore, if the AP transmits the non-low-latency service data again within the current TXOP, it can similarly carry the second indication information in the third PPDU (i.e., the last PPDU) carrying the non-low-latency service data to indicate that the low-latency service data is about to be transmitted after sending the third PPDU within the current TXOP.

The method for low-latency service data transmission involved in embodiments of the present disclosure can include at least one of the embodiments and the foregoing steps. For example, any one of steps S21-S28 can be implemented as an independent embodiment, steps S21-S27 can be implemented as an independent embodiment, and steps S21-S28 can be implemented as an independent embodiment, but are not limited thereto.

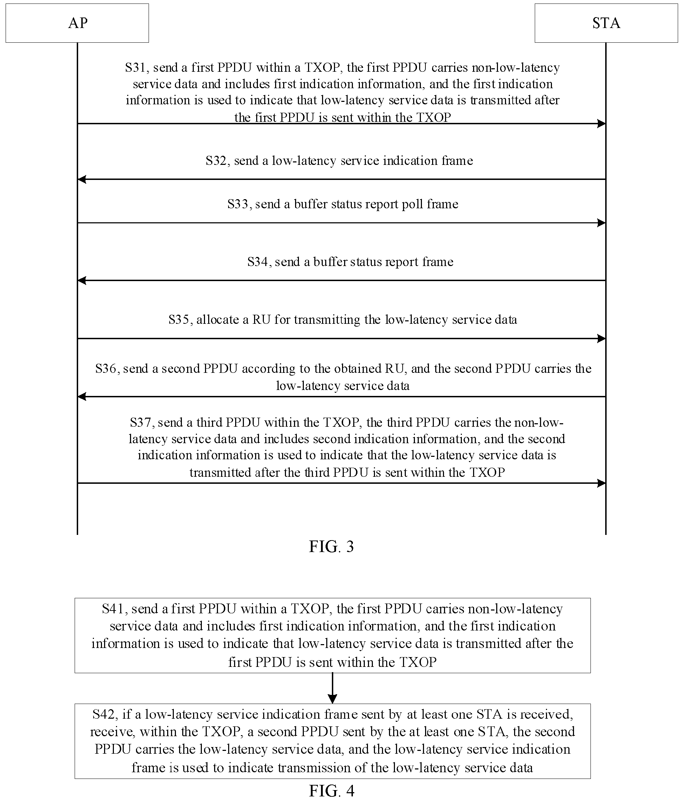

FIG. 3 shows a second schematic interactive diagram of a method for low-latency service data transmission according to an embodiment of the present disclosure. The method for low-latency service data transmission shown in FIG. 3 includes steps S31 to S37.

In the step S31, an AP sends a first PPDU within a TXOP, the first PPDU carries non-low-latency service data and includes first indication information, and the first indication information is used to indicate that low-latency service data is transmitted after the first PPDU is sent within the TXOP.

In some embodiments, the specific implementation of step S31 can refer to the implementation shown in step S21 in FIG. 2, which will not be repeated here.

In the step S32, the STA sends a low-latency service indication frame.

In some embodiments, after at least one STA monitors the first indication information in the first PPDU, if it has the low-latency service data to be transmitted, then one STA will eventually send the low-latency service indication frame to the AP within the current TXOP by accessing the channel via contention, to indicate to the AP that the low-latency service data needs to be transmitted.

In this case, if there is the at least one STA that has the low-latency service data to be transmitted within the current TXOP, then after sending the first PPDU, the AP can only receive, within the current TXOP, the low-latency service indication frame sent by one STA.

In some embodiments, the low-latency service indication frame sent by the STA to the AP within the current TXOP can include first indication information, which is used to indicate a data size of low-latency service data to be transmitted by this STA.

In the step S33, the AP sends a buffer status report poll frame.

In some embodiments, since the AP can only receive the low-latency service indication frame sent by one STA after sending the first PPDU within the current TXOP, the AP can send the Buffer Status Report Poll (BSRP) frame to this STA within the current TXOP.

The buffer status report poll frame includes a device identity of a STA that sends the low-latency service indication frame, so that this STA reports the buffer status after receiving the buffer status report poll, that is, reports the data size of the low-latency service data to be transmitted.

The device identity can be any information that uniquely identifies the STA, such as a MAC address of the STA, etc., which is not limited here.

In the step S34, the STA sends a buffer status report frame.

In some embodiments, after the STA receives the buffer status report poll frame that includes the device identity of the STA, it can send the Buffer Status Report (BSR) frame to the AP within the current TXOP.

The buffer status report frame sent by the STA is used to report the buffer status of the STA to the AP, that is, to report the data size of the low-latency service data to be transmitted.

In some embodiments, the buffer status report frame sent by the STA can include at least one of:
second indication information, used to indicate a data size of the low-latency service data to be transmitted by the STA; or
latency information of the low-latency service data to be transmitted by the STA, such as 5ms or 10ms, which is not limited here.

In the step S35, the AP allocates the RU for transmitting the low-latency service data.

In some embodiments, after receiving the buffer status report frame sent by the STA, the AP can respectively allocate, within the current TXOP, the RU for transmitting the low-latency service data to the STA.

The AP can determine, according to the second indication information and/or the latency information in the buffer status report frame reported by the STA, whether to allow the STA to transmit the low-latency service data and allocate the uplink RU for transmitting the low-latency service data to the STA.

The AP can allocate the uplink RU resource to the STA through a Multi-User Request To Send (MU-RTS) frame, and trigger the STA to perform uplink transmission of the low-latency service data through a second trigger frame (such as a Basic-Trigger frame).

In the step S36, the STA sends a second PPDU according to the obtained RU, and the second PPDU carries the low-latency service data.

In some embodiments, after the STA obtains the uplink RU resource allocated by the AP for transmitting the low-latency service data, the STA can send, within the current TXOP, the second PPDU carrying the low-latency service data according to the obtained RU resource.

In the step S37, the AP sends a third PPDU within the TXOP, the third PPDU carries the non-low-latency service data and includes second indication information, and the second indication information is used to indicate that the low-latency service data is transmitted after the third PPDU is sent within the TXOP.

In some embodiments, after the AP completes the low-latency service data transmission with the STA within the current TXOP, if there is still time remaining in the current TXOP, it can continue to send a PPDU carrying the non-low-latency service data within the current TXOP to continue the transmission of the non-low-latency service data.

Furthermore, the AP can carry the second indication information in the last PPDU (the third PPDU) carrying the non-low-latency service data to indicate, through the second indication information, that the low-latency service data is about to be transmitted after the third PPDU is sent within the current TXOP.

Based on this, within the current TXOP, if the AP receives a low-latency service indication frame sent by a STA after sending the third PPDU, it can receive, based on the implementation shown in steps S33-S36, the PPDU carrying the low-latency service data sent by the STA.

The method for low-latency service data transmission involved in embodiments of the present disclosure can include at least one of the embodiments and the foregoing steps. For example, any one of steps S31-S37 can be implemented as an independent embodiment, steps S31-S36 can be implemented as an independent embodiment, and steps S31-S37 can be implemented as an independent embodiment, but are not limited thereto.

FIG. 4 shows a first schematic flowchart of a method for low-latency service data transmission according to an embodiment of the present disclosure. As shown in FIG. 4, the method is executed by an AP and includes steps S41 and S42.

In the step S41, a first PPDU is sent within a TXOP, the first PPDU carries non-low-latency service data and includes first indication information, and the first indication information is used to indicate that low-latency service data is transmitted after the first PPDU is sent within the TXOP.

In some embodiments, the AP can continuously send, within the TXOP, at least one PPDU carrying the non-low-latency service data. The first PPDU is the last PPDU carrying the non-low-latency service data sent by the AP within the TXOP.

In some embodiments, when the AP sends the first PPDU (i.e., the last PPDU) carrying the non-low-latency service data within the TXOP for transmission of the non-low-latency service data, it can carry the first indication information within the first PPDU to indicate, through the first indication information, that the transmission of the low-latency service data is about to be performed after the first PPDU is sent within the current TXOP.

In some embodiments, the first indication information can be a pre-emption identity, or other indication information that is pre-defined or pre-negotiated with the STA to indicate that the low-latency service data is about to be transmitted, which is not limited here.

In some embodiments, within the current TXOP, the AP sends a first trigger frame after sending the first PPDU, and the first trigger frame includes at least one RA-RU.

The first trigger frame includes the at least one RA-RU, each RA-RU being used to send a low-latency service indication frame.

The low-latency service indication frame is used to indicate the transmission of the low-latency service data.

The individual RA-RUs do not overlap with each other.

By sending the first trigger frame, the AP can enable a STA that has monitored the first indication information and has the low-latency service data to be transmitted to select any RA-RU within the current TXOP to send the low-latency service indication frame to indicate to the AP that the corresponding STA needs to transmit the low-latency service data.

In some embodiments, the AP can send the first PPDU and the first trigger frame in the form of an Aggregated MAC Protocol Data Unit (A-MPDU), that is, send both the first PPDU and the first trigger frame through the A-MPDU.

In the step S42, if a low-latency service indication frame sent by the at least one STA is received, a second PPDU sent by the at least one STA is received within the TXOP, the second PPDU carries the low-latency service data, and the low-latency service indication frame is used to indicate transmission of the low-latency service data.

In some embodiments, if the AP sends the first trigger frame after sending the first PPDU, the AP can receive, within the current TXOP, the low-latency service indication frame sent by the at least one STA.

Each low-latency service indication frame is sent within the current TXOP by a STA that has monitored the first indication information in the first PPDU and has low-latency service data to be transmitted, according to any RA-RU carried in the first trigger frame, and is used to indicate to the AP that the low-latency service data needs to be transmitted.

In some embodiments, the low-latency service indication frame sent by each STA can include first indication information, which is used to indicate a data size of the low-latency service data to be transmitted by the corresponding STA.

In some embodiments, in a case where the AP does not send the first trigger frame after sending the first PPDU, if there are a plurality of STAs that have monitored the first indication information in the first PPDU and have low-latency service data to be transmitted, the plurality of STAs will access the channel via contention, and eventually one STA will send a low-latency service indication frame to the AP within the current TXOP to indicate to AP that the low-latency service data needs to be transmitted.

That is, within the current TXOP, if the AP does not send the first trigger frame after sending the first PPDU, the AP can only receive the low-latency service indication frame sent by one STA.

In some embodiments, the low-latency service indication frame sent by the STA can include first indication information, which is used to indicate a data size of low-latency service data to be transmitted by this STA.

In some embodiments, receiving, by the AP, within the current TXOP, the second PPDU sent by the at least one STA includes:
sending a buffer status report poll frame, which includes a device identity of at least one STA;
receiving a buffer status report frame sent by the at least one STA; and
allocating to the at least one STA a resource unit (RU) for transmitting the low-latency service data, and receiving the second PPDU sent, according to the obtained RU, by the at least one STA.

Specifically, if the AP sends the first trigger frame after sending the first PPDU, then the AP may receive the low-latency service indication frame sent by the at least one STA after sending the first trigger frame. If the AP does not send the first trigger frame after sending the first PPDU, then the AP may only receive the low-latency service indication frame sent by one STA after sending the first PPDU. In this case, the AP can send the Buffer Status Report Poll (BSRP) frame within the current TXOP.

The buffer status report poll frame includes a device identity of at least one STA that replies with the low-latency service indication frame and the AP allows to transmit the low-latency service data, so that the corresponding STA reports the buffer status after receiving the buffer status report poll, that is, reports the data size of the low-latency service data to be transmitted.

The device identity can be any information that uniquely identifies the STA, such as a MAC address of the STA, etc., which is not limited here.

Furthermore, the AP can receive the buffer status report frame sent by the at least one STA.

The buffer status report frame sent by each STA is used to report the buffer status of the corresponding STA to the AP, that is, to report the data size of the low-latency service data to be transmitted by the corresponding STA.

In some embodiments, the buffer status report frame sent by each STA can include at least one of:
second indication information, used to indicate a data size of the low-latency service data to be transmitted by the corresponding STA; or
latency information of the low-latency service data to be transmitted by the corresponding STA, such as 5ms or 10ms, which is not limited here.

Furthermore, within the TXOP, the AP can allocate the uplink RU for transmitting the low-latency service data to each STA that reports the buffer status report frame, so that each STA sends, according to the allocated uplink RU, the second PPDU carrying the low-latency service data.

The AP can allocate uplink RU resources to individual STAs through the MU-RTS frame, and trigger, through a second trigger frame (such as a Basic-Trigger frame), individual STAs to perform uplink transmission of low-latency service data, thereby obtaining, within the TXOP, the second PPDU carrying the low-latency service data sent by the at least one STA.

In some embodiments, after the AP completes the low-latency service data transmission with individual STAs within the current TXOP, if there is still time remaining in the current TXOP, it can continue to send a PPDU carrying the non-low-latency service data within the current TXOP to continue the transmission of the non-low-latency service data.

Furthermore, the AP can carry the second indication information in the last PPDU (the third PPDU) carrying the non-low-latency service data to indicate, through the second indication information, that the low-latency service data is about to be transmitted after the third PPDU is sent within the current TXOP.

Based on this, the AP can transmit the low-latency service data with the at least one STA after receiving the low-latency service indication frame sent, within the current TXOP, by the at least one STA.

In some embodiments, the second indication information can be a pre-emption identity, or other indication information that is pre-defined or pre-negotiated with the STA to indicate that the low-latency service data is about to be transmitted, which is not limited here.

In some embodiments, if the AP does not receive the low-latency service indication frame sent by any STA after sending the first PPDU within the current TXOP, the AP does not receive the PPDU carrying the low-latency service data sent by any STA. Furthermore, if the AP transmits the non-low-latency service data again within the current TXOP, it can similarly carry the second indication information in the third PPDU (i.e., the last PPDU) carrying the non-low-latency service data to indicate that the low-latency service data is about to be transmitted after sending the third PPDU within the current TXOP.

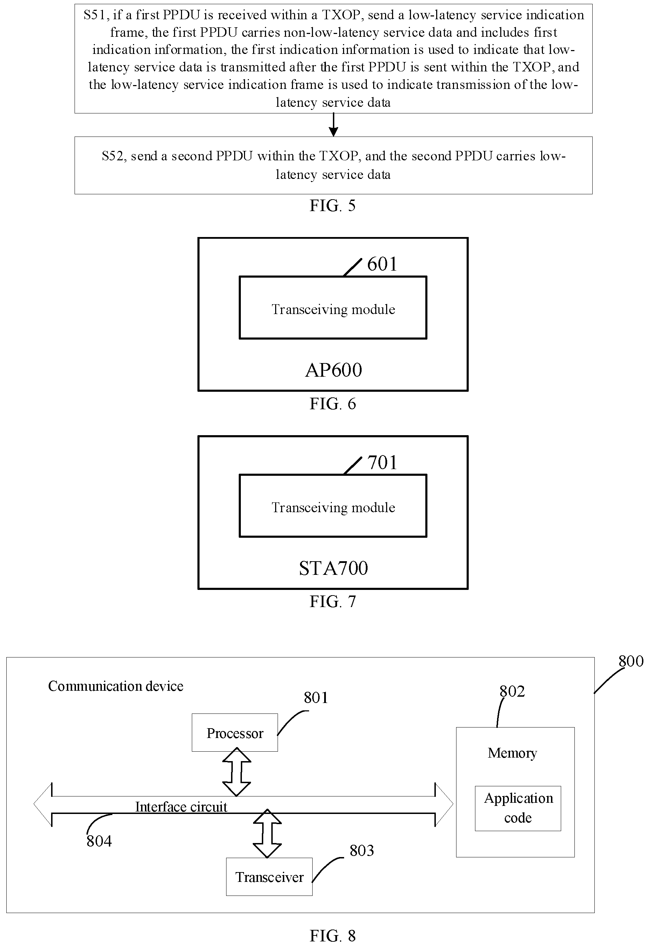

FIG. 5 shows a second schematic flowchart of a method for low-latency service data transmission according to an embodiment of the present disclosure. As shown in FIG. 5, the method is executed by a STA and includes steps S51 and S52.

In the step S51, if a first PPDU is received within a TXOP, a low-latency service indication frame is sent, the first PPDU carries non-low-latency service data and includes first indication information, the first indication information is used to indicate that low-latency service data is transmitted after the first PPDU is sent within the TXOP, and the low-latency service indication frame is used to indicate transmission of the low-latency service data.

In some embodiments, the AP can continuously send, within the TXOP, at least one PPDU carrying the non-low-latency service data. The first PPDU is the last PPDU carrying the non-low-latency service data sent by the AP within the TXOP. The first PPDU carries the first indication information to indicate, through the first indication information, that the transmission of the low-latency service data is about to be performed after the first PPDU is sent within the current TXOP.

The TXOP is a TXOP used for transmission of non-low-latency service data.

The STA receiving the first PPDU within the TXOP can be considered that the STA has monitored the first indication information in the first PPDU within the TXOP.

In some embodiments, the first indication information can be a pre-emption identity, or other indication information that is pre-defined or pre-negotiated between the AP and the STA to indicate that the low-latency service data is about to be transmitted, which is not limited here.

In some embodiments, within the current TXOP, if the AP sends the first trigger frame after sending the first PPDU, the STA can, after receiving the first trigger frame, select any one of the RA-RUs from the first trigger frame to send the low-latency service indication frame to the AP, to indicate to the AP that the corresponding STA needs to transmit the low-latency service data.

The first trigger frame includes the at least one RA-RU, each RA-RU being used to send a low-latency service indication frame.

The low-latency service indication frame is used to indicate the transmission of the low-latency service data.

The individual RA-RUs do not overlap with each other.

By sending the first trigger frame, the AP can enable a STA that has monitored the first indication information and has the low-latency service data to be transmitted to select any RA-RU within the current TXOP to send the low-latency service indication frame.

In some embodiments, if the AP does not send the first trigger frame after sending the first PPDU, the STA can, upon receiving the first PPDU and having the low-latency service data to be transmitted, eventually send the low-latency service indication frame to the AP within the current TXOP by accessing the channel via contention, to indicate to the AP that the low-latency service data needs to be transmitted.

In some embodiments, the low-latency service indication frame sent by the STA can include first indication information, which is used to indicate a data size of low-latency service data to be transmitted by this STA.

In the step S52, a second PPDU is sent within the TXOP, and the second PPDU carries low-latency service data.

In some embodiments, sending, by the STA, the second PPDU within the current TXOP includes:
receiving a buffer status report poll frame, and the buffer status report poll frame includes a device identity of at least one STA;
sending a buffer status report frame; and
obtaining a resource unit (RU) for transmitting the low-latency service data, and sending, according to the obtained RU, the second PPDU carrying the low-latency service data.

Specifically, the STA can receive, within the current TXOP, the buffer status report poll frame sent by the AP.

The buffer status report poll frame includes a device identity of at least one STA that replies with the low-latency service indication frame and the AP allows to transmit the low-latency service data, so that the corresponding STA reports the buffer status after receiving the buffer status report poll, that is, reports the data size of the low-latency service data to be transmitted.

The device identity can be any information that uniquely identifies the STA, such as a MAC address of the STA, etc., which is not limited here.

Furthermore, the STA can send the buffer status report frame to the AP.

The buffer status report frame sent by the STA is used to report the buffer status of the STA to the AP, that is, to report the data size of the low-latency service data to be transmitted by the STA.

In some embodiments, the buffer status report frame sent by the STA can include at least one of:
second indication information, used to indicate a data size of the low-latency service data to be transmitted by the STA; or
latency information of the low-latency service data to be transmitted by the STA, such as 5ms or 10ms, which is not limited here.

Furthermore, the STA can obtain, within the TXOP, the uplink RU allocated by the AP for transmitting the low-latency service data, and then send, according to the obtained uplink RU, the second PPDU carrying the low-latency service data.

The STA can obtain, through the MU-RTS frame sent by the AP within the current TXOP, the uplink RU allocated by the AP, and send the second PPDU carrying the low-latency service data sent after receiving the second trigger frame (such as the Basic-Trigger frame).

In some embodiments, after the AP completes the low-latency service data transmission with individual STAs within the current TXOP, if there is still time remaining in the current TXOP, it can continue to send a PPDU carrying the non-low-latency service data within the current TXOP to continue the transmission of the non-low-latency service data.

Furthermore, the AP can carry the second indication information in the last PPDU (the third PPDU) carrying the non-low-latency service data to indicate, through the second indication information, that the low-latency service data is about to be transmitted after the third PPDU is sent within the current TXOP.

Based on this, if the STA receives the third PPDU and has low-latency service data to be transmitted, it can send the low-latency service indication frame to the AP to realize the transmission of the low-latency service data with the AP.

In some embodiments, the second indication information can be a pre-emption identity, or other indication information that is pre-defined or pre-negotiated between the AP and the STA to indicate that the low-latency service data is about to be transmitted, which is not limited here.

FIG. 6 is a schematic structural diagram of an AP provided in an embodiment of the present disclosure. As shown in FIG. 6, an AP 600 can include a transceiving module 601.

In some embodiments, the transceiving module 601 is configured to send a first physical protocol data unit (PPDU) within a transmission opportunity (TXOP), the first PPDU carries non-low-latency service data and includes first indication information, and the first indication information is configured to indicate that low-latency service data is transmitted after the first PPDU is sent within the TXOP; and
the transceiving module 601, configured to, if a low-latency service indication frame sent by at least one STA is received, receive, within the TXOP, a second PPDU sent by the at least one STA, the second PPDU carries the low-latency service data, and the low-latency service indication frame is configured to indicate transmission of the low-latency service data.

In some embodiments, the transceiving module 601 is configured to execute at least one of the transceiving steps executed by the AP in any of the above methods (e.g., steps S21, S22, S24, S26, S28, S31, S33, S35, S37, S41-S42, but not limited thereto), which will not be elaborated here.

FIG. 7 is a schematic structural diagram of a STA provided in an embodiment of the present disclosure. As shown in FIG. 7, a STA 700 can include a transceiving module 701.

In some embodiments, the transceiving module 701 is configured to, if a first PPDU is received within a transmission opportunity (TXOP), send a low-latency service indication frame, the first PPDU carries non-low-latency service data and includes first indication information, the first indication information is configured to indicate that low-latency service data is transmitted after the first PPDU is sent within the TXOP, and the low-latency service indication frame is configured to indicate transmission of the low-latency service data; and
the transceiving module, configured to send a second PPDU within the TXOP, and the second PPDU carries the low-latency service data.

In some embodiments, the transceiving module 701 is configured to execute at least one of the transceiving steps executed by the STA in any of the above methods (e.g., steps S23, S25, S27, S32, S34, S36, S51-S52, but not limited thereto), which will not be elaborated here.

It should be understood that the division of units or modules is only a logical functional division. In actual implementations, they may be completely or partially integrated into a single physical entity, or they may be physically separated. Furthermore, the units or modules can be implemented in the form of a processor invoking software, for example, the device includes a processor connected to a memory storing an instruction, and the processor invokes the instruction stored in the memory to implement any of the above methods or to implement the functions of the units or modules. The processor is, for example, a general-purpose processor, such as a central processing unit (CPU) or a microprocessor, and the memory is either internal or external to the device. Alternatively, the units or modules in the device can be implemented in the form of hardware circuits. The functions of some or all of the units or modules can be implemented through the design of the hardware circuits, where the hardware circuits may be understood as one or more processors. For example, in one implementation, the hardware circuit is an application-specific integrated circuit (ASIC), and the functions of some or all of the units or modules are implemented through the design of the logical relationships between the components within the circuit. In another implementation, for example, the hardware circuit described above can be implemented by using a programmable logic device (PLD), such as a field programmable gate array (FPGA), which can include a large number of logic gate circuits. The connection relationships between the logic gate circuits are configured through a configuration file, thereby implementing the functions of some or all of the units or modules described above. All units or modules of the above device can be implemented entirely by a processor invoking software, or entirely by hardware circuits, or partially by a processor invoking software and the rest by hardware circuits.

In the embodiments of the present disclosure, the processor is a circuit with signal processing capability. In one implementation, the processor may be a circuit with instruction reading and running capability, such as a central processing unit (CPU), a microprocessor, a graphics processing unit (GPU) (which may be understood as a microprocessor), or a digital signal processor (DSP); in another implementation, the processor may implement certain functions through the logical relationship of a hardware circuit, and the logical relationship of the above hardware circuit may be fixed or reconfigurable, for example, the processor is a hardware circuit implemented by an application-specific integrated circuit (ASIC) or a programmable logic device (PLD), such as an FPGA. In a reconfigurable hardware circuit, the process of the processor loading a configuration document to implement the hardware circuit configuration may be understood as the process of the processor loading instructions to implement the functions of some or all of the above units or modules. In addition, it can also be a hardware circuit designed for artificial intelligence, which can be understood as an ASIC, such as a neural network processing unit (NPU), a tensor processing unit (TPU), a deep learning processing unit (DPU), etc.

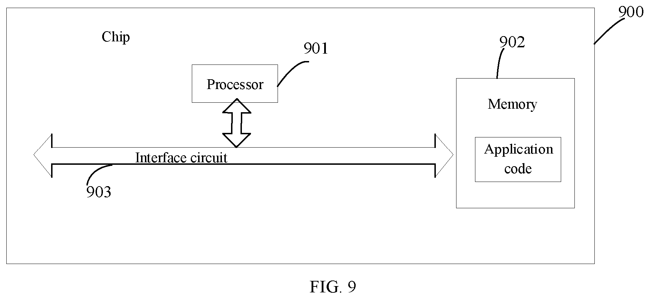

FIG. 9 is a schematic diagram of a structure of a communication device provided in an embodiment of the present disclosure. The communication device 800 may be an AP or a STA, or a chip, a chip system, or a processor that supports the AP or STA in implementing any of the above methods. The communication device may be configured to implement the method described in the above method embodiments. For details, please refer to the description of the above method embodiments.

As shown in FIG. 9, the communication device 800 includes one or more processors 801. The processor 801 may be a general-purpose processor or a dedicated processor, such as a baseband processor or a central processing unit (CPU). The baseband processor may be configured to process communication protocols and communication data. The CPU may be configured to control a communication device (e.g., a base station, a baseband chip, a terminal device, a terminal device chip, a DU or a CU, etc.), execute programs, and process program data. The communication device 800 is configured to perform any of the above methods.

In some embodiments, the communication device 800 further includes one or more memories 802 for storing instructions. In some embodiments, all or a part of the memory 801 may be located external to the communication device 800.

In some embodiments, the communication device 800 further includes one or more transceivers 803. When the communication device 800 includes one or more transceivers 803, the transceiver 803 performs at least one of the communication steps such as sending and/or receiving in the above methods (e.g., steps S21-S28, S31-S37, S41-S42, and S51-S52, but not limited thereto), and the processor 801 performs at least one of other steps (e.g., determining the RU allocated to each STA, but not limited thereto).

In some embodiments, the transceiver can include a receiver and/or a sender, which may be separated or integrated. Alternatively, terms such as the transceiver, the transceiver unit, the transceiver machine, and the transceiver circuit are interchangeable; terms such as the sender, the sending unit, the sender machine, and the sending circuit are interchangeable; and terms such as the receiver, the receiving unit, the receiver machine, and the receiving circuit are interchangeable.

In some embodiments, the communication device 800 may further include one or more interface circuits 804. In some embodiments, the interface circuit 804 is connected to the memory 801 and may be configured to receive signals from the memory 801 or other devices, and may be configured to send signals to the memory 801 or other devices. For example, the interface circuit 804 may read instructions stored in the memory 801 and send the instructions to the processor 801.

The communication device 800 described in the above embodiments may be the AP or the STA, but the scope of the communication device 800 described in the present disclosure is not limited thereto, and the structure of the communication device 800 may not be limited to FIG. 9. The communication device may be an independent device or a part of a larger device. For example, the communication device may be: (1) an independent integrated circuit (IC), or a chip, or a chip system or subsystem; (2) a collection of one or more ICs, In some embodiments, the above IC collection may further include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others, etc.

FIG. 90 is a schematic structural diagram of a chip 9000 provided in an embodiment of the present disclosure. The chip 9000 includes one or more processors 9001, and the chip 9000 is configured to perform any of the above methods.

In some embodiments, the chip 9000 further includes one or more interface circuits 9003. In some embodiments, the interface circuit 9003 is connected to a memory 9002, and may be configured to receive signals from the memory 9002 or other devices, and may be configured to send signals to the memory 9002 or other devices. For example, the interface circuit 9003 may read instructions stored in the memory 9002 and send the instructions to the processor 9001.

In some embodiments, the interface circuit 9003 performs at least one of the communication steps such as sending and/or receiving in the above method (e.g., steps S21-S28, S31-S37, S41-S42, S51-S52, but not limited thereto), and the processor 9001 performs at least one of the other steps (e.g., determining the RU allocated to each STA, but not limited thereto).

In some embodiments, the terms interface circuit, interface, transceiving pin, transceiver, etc., can be used interchangeably.

In some embodiments, the chip 9000 further includes one or more memories 9002 for storing instructions. In some embodiments, all or part of the memories 9002 may be located outside of the chip 9000.

The present disclosure also provides a storage medium. The storage medium described above stores an instruction. The instruction, when run on the communication device 800, causes the communication device 800 to perform any of the above methods. In some embodiments, the storage medium described above is an electronic storage medium. In some embodiments, the storage medium described above is a computer-readable storage medium, but is not limited thereto. The storage medium may also be a storage medium readable by other devices. In some embodiments, the storage medium described above may be a non-transitory storage medium, but is not limited thereto. The storage medium described above may also be a transient storage medium.

The present disclosure also provides a program product that, when executed by the communication device 800, causes the communication device 800 to perform any of the above methods. In some embodiments, the program product is a computer program product.

The present disclosure also provides a computer program that, when executed on a computer, causes the computer to perform any of the above methods. The above description is only preferred embodiments of the disclosure and an explanation of the applied technical principles. Those skilled in the art should understand that the scope involved in the present disclosure is not limited to the technical solutions formed by the specific combination of the above technical features, and should also cover the other technical solutions, without departing from the above disclosed concept, formed by arbitrarily combining the above technical features or the equivalent features. For example, the above-mentioned features and the technical features disclosed in the disclosure (but not limited to) having similar functions are replaced with each other to form the technical solutions.

## Claims

1. A method for low-latency service data transmission, comprising:
sending, by an AP, a first physical protocol data unit (PPDU) within a transmission opportunity (TXOP), wherein the first PPDU carries non-low-latency service data and comprises first indication information, and the first indication information is configured to indicate that low-latency service data is transmitted after the first PPDU is sent within the TXOP; and
if a low-latency service indication frame sent by at least one STA is received, receiving, by the AP, within the TXOP, a second PPDU sent by the at least one STA, wherein the second PPDU carries the low-latency service data, and the low-latency service indication frame is configured to indicate transmission of the low-latency service data.

2. The method according to claim 1, wherein the method further comprises:
sending, by the AP, a first trigger frame after sending the first PPDU, wherein the first trigger frame comprises at least one random access radio unit (RA-RU), and each RA-RU is configured to send the low-latency service indication frame.

3. The method according to claim 1, wherein the method further comprises:
sending, by the AP, a third PPDU within the TXOP after receiving the second PPDU sent by the at least one STA, wherein the third PPDU carries the non-low-latency service data and comprises second indication information, and the second indication information is configured to indicate that the low-latency service data is transmitted after the third PPDU is sent within the TXOP.

4. The method according to any one of claims 1-3, wherein each low-latency service indication frame comprises first indication information, and the first indication information is configured to indicate a data size of low-latency service data to be transmitted by a corresponding STA.

5. The method according to any one of claims 1-3, wherein receiving, by the AP, within the TXOP, the second PPDU sent by the at least one STA comprises:
sending, by the AP, a buffer status report poll frame, wherein the buffer status report poll frame comprises a device identity of the at least one STA;
receiving, by the AP, a buffer status report frame sent by the at least one STA; and
allocating, by the AP, a resource unit (RU) for transmitting the low-latency service data to the at least one STA and receiving the second PPDU sent, according to an obtained RU, by the at least one STA.

6. The method according to claim 5, wherein each buffer status report frame comprises at least one of:
second indication information, configured to indicate a data size of low-latency service data to be transmitted by a corresponding STA; or
latency information of the low-latency service data to be transmitted by the corresponding STA.

7. The method according to claim 3, wherein the first indication information and the second indication information are pre-emption identities.

8. A method for low-latency service data transmission, comprising:
if a first PPDU is received within a transmission opportunity (TXOP), sending, by a STA, a low-latency service indication frame, wherein the first PPDU carries non-low-latency service data and comprises first indication information, the first indication information is configured to indicate that low-latency service data is transmitted after the first PPDU is sent within the TXOP, and the low-latency service indication frame is configured to indicate transmission of the low-latency service data; and
sending, by the STA, a second PPDU within the TXOP, wherein the second PPDU carries the low-latency service data.

9. The method according to claim 8, wherein the method further comprises:
receiving, by the STA, a first trigger frame after receiving the first PPDU, wherein the first trigger frame comprises at least one RA-RU, and each RA-RU is configured to send the low-latency service indication frame.

10. The method according to claim 8 or 9, wherein the low-latency service indication frame comprises first indication information, and the first indication information is configured to indicate a data size of low-latency service data to be transmitted.

11. The method according to claim 9, wherein sending, by the STA, the low-latency service indication frame comprises:
sending, by the STA, the low-latency service indication frame according to any RA-RU.

12. The method according to claim 8 or 9, wherein sending, by the STA, the second PPDU within the TXOP comprises:
receiving, by the STA, a buffer status report poll frame, wherein the buffer status report poll frame comprises a device identity of at least one STA;
sending, by the STA, a buffer status report frame; and
obtaining, by the STA, a RU for transmitting the low-latency service data and sending the second PPDU according to the RU.

13. The method according to claim 12, wherein the buffer status report frame comprises at least one of:
second indication information, configured to indicate a data size of low-latency service data to be transmitted; or
latency information of the low-latency service data to be transmitted.

14. The method according to claim 8, wherein the first indication information is a pre-emption identity.

15. An AP, comprising:
a transceiving module, configured to send a first physical protocol data unit (PPDU) within a transmission opportunity (TXOP), wherein the first PPDU carries non-low-latency service data and comprises first indication information, and the first indication information is configured to indicate that low-latency service data is transmitted after the first PPDU is sent within the TXOP; and
the transceiving module, configured to, if a low-latency service indication frame sent by at least one STA is received, receive, within the TXOP, a second PPDU sent by the at least one STA, wherein the second PPDU carries the low-latency service data, and the low-latency service indication frame is configured to indicate transmission of the low-latency service data.

16. A STA, comprising:
a transceiving module, configured to, if a first PPDU is received within a transmission opportunity (TXOP), send a low-latency service indication frame, wherein the first PPDU carries non-low-latency service data and comprises first indication information, the first indication information is configured to indicate that low-latency service data is transmitted after the first PPDU is sent within the TXOP, and the low-latency service indication frame is configured to indicate transmission of the low-latency service data; and
the transceiving module, configured to send a second PPDU within the TXOP, wherein the second PPDU carries the low-latency service data.

17. An AP, comprising:
one or more processors;
wherein the Non-AP MLD is configured to perform the method for low-latency service data transmission according to any one of claims 1-7.

18. A STA, comprising:
one or more processors;
wherein the AP MLD is configured to perform the method for low-latency service data transmission according to any one of claims 8-14.

19. A storage medium storing instructions that, when running on a communication device, cause the communication device to perform the method for low-latency service data transmission according to any one of claims 1-7 or the method for low-latency service data transmission according to any one of claims 8-14.
